# EUROPEAN PATENT APPLICATION

(11) **EP 4 700 871 A1**
(43) Date of publication of application: **25.02.2026**
(21) Application number: 24792467.3
(22) Date of filing: 28.03.2024
(51) Int. Cl.: H01M 4/86, B01J 31/28, B01J 33/00, H01M 4/90, H01M 4/92, H01M 8/10

(54) **ELECTRODE CATALYST LAYER, MEMBRANE ELECTRODE ASSEMBLY, AND POLYMER ELECTROLYTE FUEL CELL**

(30) Priority: 20.04.2023 JP 2023069122
(71) Applicant: Toppan Holdings Inc., Tokyo 110-0016 (JP)
(72) Inventor: OZAWA, Madoka, Tokyo 110-0016 (JP)
(74) Representative: Hoffmann Eitle
(86) International application number: PCT/JP2024/012903
(87) International publication number: WO 2024/219191

(57) **Abstract**

An electrode catalyst layer for a polymer electrolyte fuel cell includes catalyst particles, a polymer electrolyte, and a fibrous material. The catalyst particles each include an electroconductive support, a plurality of metal particles supported on the electroconductive support, an ionic liquid in contact with a surface of the metal particles and electroconductive support, and an inorganic film covering a surface of the metal particles and electroconductive support via the ionic liquid. The inorganic film contains Si. The ratio of the number of silicon atoms to the total number of atoms of carbon, nitrogen, oxygen, fluorine, silicon, sulfur, and platinum elements in the electrode catalyst layer, as obtained by energy dispersive X-ray spectroscopy, is 0.5 at% or more and 10 at% or less.

## Description

### [Technical Field]

The present invention relates to an electrode catalyst layer, a membrane electrode assembly, and a polymer electrolyte fuel cell.

### [Background Art]

Fuel cells are power generation systems that produce electricity through a chemical reaction between hydrogen and oxygen. Fuel cells have features such as high efficiency, low environmental load, and low noise compared to conventional power generation systems, and are receiving attention as a future clean energy source. In particular, polymer electrolyte fuel cells that are usable near room temperature are regarded as promising for use as in-vehicle power sources and stationary power sources for domestic use, and various research and development relating to polymer electrolyte fuel cells has been carried out in recent years. The problems facing practical use include a need to improve cell performance such as the power generation characteristics and durability, construction of infrastructure, and reduction of production costs.

Generally, polymer electrolyte fuel cells are formed by stacking a large number of single cells. A single cell has a structure in which a membrane electrode assembly, which has a fuel electrode (anode) that supplies a fuel gas and an oxygen electrode (cathode) that supplies an oxidant joined to the opposing two sides of a polymer electrolyte membrane, is sandwiched between separators having gas flow paths and cooling water flow paths. The fuel electrode (anode) and the oxygen electrode (cathode) are mainly constituted by an electrode catalyst layer including a catalyst material such as a platinum group noble metal, an electroconductive support, and a polymer electrolyte, and a gas diffusion layer having both gas permeability and conductivity.

Polymer electrolyte fuel cells produce electricity through the following electrochemical reactions. First, in a fuel electrode-side electrode catalyst layer, the hydrogen contained in the fuel gas is oxidized by the catalyst material to generate protons and electrons. The generated protons pass through the polymer electrolyte in the electrode catalyst layer and the polymer electrolyte membrane that is in contact with the electrode catalyst layer, and reach an oxygen electrode-side electrode catalyst layer. Furthermore, the electrons generated at the same time pass through the electroconductive support in the fuel electrode-side electrode catalyst layer, the gas diffusion layer that is in contact with the fuel electrode-side electrode catalyst layer, a separator, and an external circuit, and reach the oxygen electrode-side electrode catalyst layer. Then, in the oxygen electrode-side electrode catalyst layer, the protons and the electrons react with the oxygen contained in an oxidant gas such as air to generate water. In this series of reactions, because the proton conduction resistance is greater than the electron conduction resistance, it is important for the proton conduction to be efficient to improve the reactivity and improve the performance as a fuel cell.

Currently, there is a demand for fuel cells that exhibit high output and high durability for cost reduction of fuel cells. However, under low-humidity conditions, the proton transport of the polymer electrolyte in the catalyst layer decreases, resulting in a problem of decreased output. In addition, the catalyst in the catalyst layer coarsens during long-term operation, leading to a decrease in output.

In response to the above problems, PTL 1 proposes a catalyst layer containing an ionic liquid.

### [Citation List]

### [Patent Literature]

PTL 1: JP 7026669 B

### [Summary of the Invention]

### [Technical Problem]

PTL 1 describes that by including an ionic liquid in the electrode catalyst layer, excellent proton transport ability is exhibited even under low-humidity conditions, and an improvement in output can be expected. However, because the ionic liquid flows out during long-term operation, the output gradually decreases, and there is a problem with durability when used as a fuel cell. Furthermore, even if an ionic liquid is included, coarsening of the catalyst due to long-term operation cannot be suppressed. In other words, by simply including an ionic liquid, the improvement in output is limited to a short period, and the problem of durability cannot be resolved.

The present invention has been made in view of the above points, and an object thereof is to provide an electrode catalyst layer, a membrane electrode assembly, and a polymer electrolyte fuel cell that have excellent power generation performance and durability.

### [Solution to Problem]

[1] An electrode catalyst layer for a polymer electrolyte fuel cell,
   the electrode catalyst layer including catalyst particles, a polymer electrolyte, and a fibrous material, in which
   the catalyst particles each include an electroconductive support, a plurality of metal particles supported on the electroconductive support, an ionic liquid in contact with a surface of the metal particles and electroconductive support, and an inorganic film covering a surface of the metal particles and electroconductive support via the ionic liquid,
   the inorganic film contains Si, and
   a ratio of a number of silicon atoms to a total number of atoms of carbon, nitrogen, oxygen, fluorine, silicon, sulfur, and platinum elements in the electrode catalyst layer, as obtained by energy dispersive X-ray spectroscopy, is 0.5 at% or more and 10 at% or less.[2] The electrode catalyst layer according to [1], in which
   the inorganic film contains silica.[3] The electrode catalyst layer according to [1] or [2], in which
   the ionic liquid is an imidazolium salt.[4] The electrode catalyst layer according to [3], in which
   the ionic liquid is a 1-alkyl-3-methylimidazolium bis(trifluoromethanesulfonyl)imide.[5] The electrode catalyst layer according to [3], in which
   the ionic liquid is 1-butyl-3-methylimidazolium bis(trifluoromethanesulfonyl)imide.[6] The electrode catalyst layer according to any one of [1] to [5], in which
   the fibrous material exhibits at least one type of conductivity among electron conductivity and proton conductivity. [7] The electrode catalyst layer according to any one of [1] to [6], in which
   the fibrous material includes an azole structure.[8] A membrane electrode assembly including:
      a polymer electrolyte membrane; and
      the electrode catalyst layer according to [1] or [2] provided on at least one surface of the polymer electrolyte membrane.[9] A polymer electrolyte fuel cell including the membrane electrode assembly according to [8].

### [Advantageous Effects of the Invention]

According to the present invention, it is possible to provide an electrode catalyst layer, a membrane electrode assembly, and a polymer electrolyte fuel cell having excellent power generation performance and durability.

### [Brief Description of the Drawings]

Fig. 1 is a schematic cross-sectional view showing a configuration example of an electrode catalyst layer according to an embodiment of the present invention.
Fig. 2 is a schematic cross-sectional view of a catalyst particle according to an embodiment of the present invention.
Fig. 3 is a schematic enlarged cross-sectional view of the vicinity of a metal particle according to an embodiment of the present invention.
Fig. 4 shows a configuration example of a membrane electrode assembly according to the present embodiment, where Fig. 4(a) is a plan view of the membrane electrode assembly when viewed from an oxygen electrode side of an electrode catalyst layer, and Fig. 4(b) is a cross-sectional view taken along line X-X' in Fig. 4(a).
Fig. 5 is an exploded perspective view showing a configuration example of a polymer electrolyte fuel cell.

### [Description of the Embodiments]

An embodiment of the present invention will be described below with reference to the drawings. It should be noted that the present invention is not limited to the following embodiment, and design modifications can be made on the basis of the knowledge of a person skilled in the art, and such modifications are also included in the scope of the present invention. In addition, the drawings are exaggerated as appropriate to facilitate understanding.

### [Configuration of Electrode Catalyst Layer]

Hereinafter, a specific configuration of the electrode catalyst layer according to the present embodiment will be described with reference to the drawings.

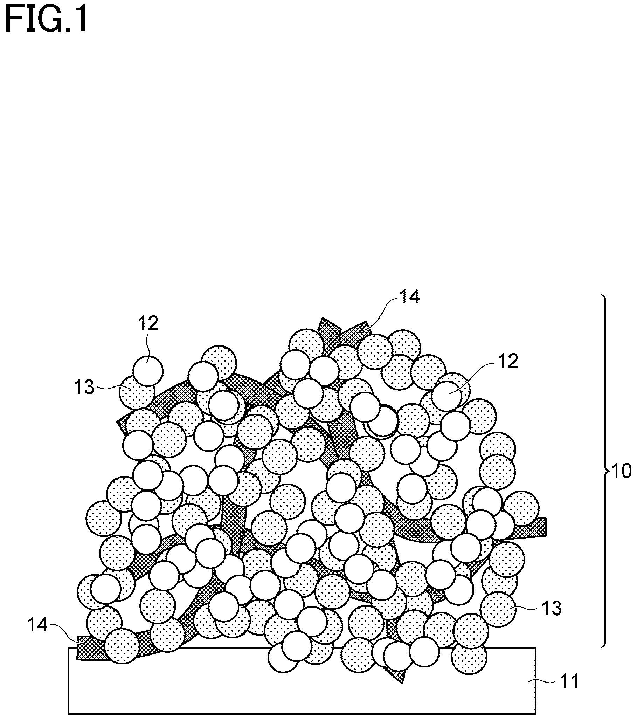

As shown in the schematic diagram of Fig. 1, an electrode catalyst layer 10 according to the present embodiment includes catalyst particles 12, a polymer electrolyte 13, and a fibrous material 14. Further, in the electrode catalyst layer 10, those portions where none of the above components exist may be voids. The electrode catalyst layer 10 is fixed to the surface of the polymer electrolyte membrane 11 by bonding or the like.

### (Catalyst Particle 12)

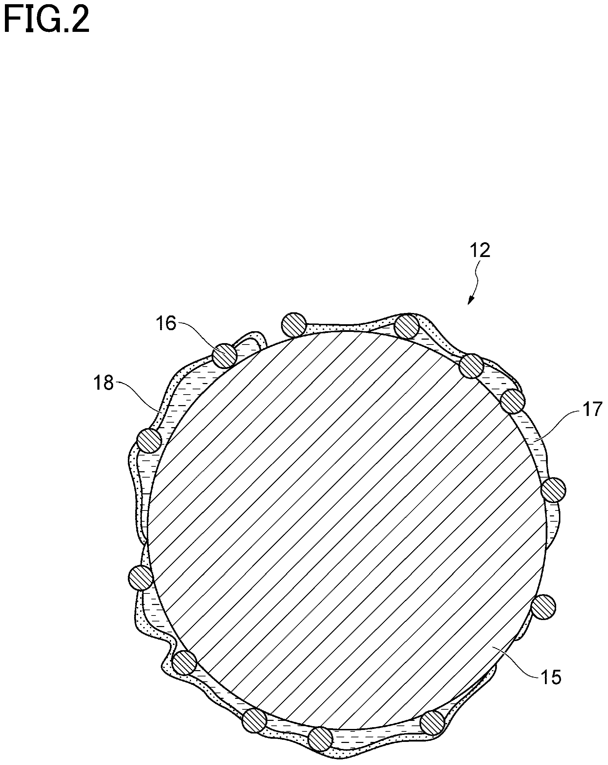

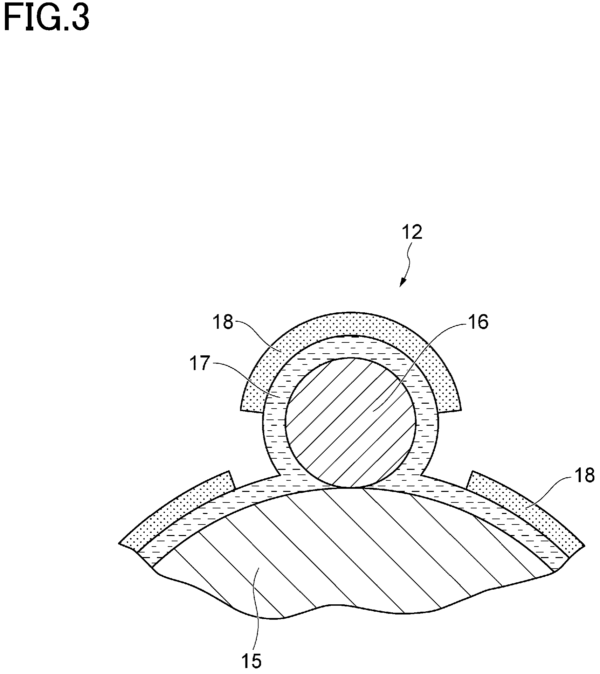

First, the catalyst particle 12 according to the present embodiment will be described. As shown in the schematic diagrams of Figs. 2 and 3, the catalyst particle 12 has an electroconductive support 15, a plurality of metal particles 16 supported on the electroconductive support 15, an ionic liquid 17, and an inorganic film 18.

### (Electroconductive Support)

As the material of the electroconductive support 15, a support material that has conductivity, and is capable of supporting the catalyst particles 12 without being eroded by the metal particles 16, can be used. It is possible to use carbon particles as the electroconductive support 15. Examples of the carbon particles include carbon black, graphite, black lead, activated carbon, carbon nanotubes, carbon nanofibers, and fullerenes.

The electroconductive support preferably has a particle size of about 10 nm or more and 1,000 nm or less, and more preferably has a particle size of about 10 nm or more and 100 nm or less. As a result of the particle size being 10 nm or more, the electroconductive support does not become packed in the electrode catalyst layer 10 too densely, which suppresses a reduction in the gas diffusion properties of the electrode catalyst layer 10. As a result of the particle size being 1,000 nm or less, the occurrence of cracks in the electrode catalyst layer 10 is suppressed. The particle size of the electroconductive support is the volume average diameter determined by laser diffraction/scattering.

In a case where the electroconductive support 15 includes carbon particles, the peak intensity ratio (G/D ratio) of the G band and D band obtained in Raman spectroscopy of the electroconductive support 15 is preferably 1.6 or more and 2.2 or less, and more preferably 1.8 or more and 2.0 or less. If the G/D ratio is within the above range, because the crystallinity of the electroconductive support 15 is suitable, a decrease in the durability of the electrode catalyst layer 10 can be suppressed. Herein, the wavelength of the laser light used in Raman spectroscopy is 532 nm. Further, the G band refers to a Raman peak located near 1580 cm⁻¹, and the D band refers a Raman peak located near 1360 cm⁻¹ .

### (Metal Particle)

Examples of the metal particles 16 include metals included in the platinum group, metals other than those in the platinum group, and alloys, oxides, composite oxides, and carbides of these metals. The metals included in the platinum group may be platinum, palladium, ruthenium, iridium, rhodium, and osmium. Examples of metals other than the platinum group metals include iron, lead, copper, chromium, cobalt, nickel, manganese, vanadium, molybdenum, gallium, and aluminum. In particular, the metal particles 16 are preferably platinum or platinum alloy particles. The constituent material of the metal particles 16 included in the electrode catalyst layer may be one type of metal or two or more types of metals.

The average particle size of the metal particles 16 is preferably 0.5 nm or more and 20 nm or less, and more preferably 1 nm or more and 5 nm or less. If the average particle size of the metal particles 16 is 0.5 nm or more, the stability as a catalyst is enhanced. If the average particle size of the metal particles 16 is 20 nm or less, the activity as a catalyst is enhanced. The particle size of the metal particles 16 is an average size obtained by TEM image analysis (for example, JIS H 7804:2005).

### (Ionic Liquid)

As shown in Figs. 2 and 3, the ionic liquid 17 is in contact with the surface of the electroconductive support 15 and metal particles 16. The ionic liquid 17 may be in contact with a portion of the surface of the electroconductive support 15 and may be in contact with a portion of the surface of the metal particles 16. When the electroconductive support 15 has gaps such as pores therein, the ionic liquid may permeate into at least a portion of the interior of the electroconductive support 15. When the inorganic film 18 has gaps such as pores therein, the ionic liquid 17 may also permeate into at least a portion of the interior of the inorganic film 18. The ionic liquid 17 is capable of permeating into any of the gaps in the electroconductive support 15 and the inorganic film 18.

The ionic liquid 5 is not particularly limited, but is preferably an imidazolium salt. An imidazolium salt is a salt of a cation having an imidazole ring structure and a counteranion. Examples of the cation are as follows. R and R' may be independently -CH₃, -C₂H₅, -C₃H₇, C₄H₉, -C₆H₁₃, or -CH₂-CH=CH₂.

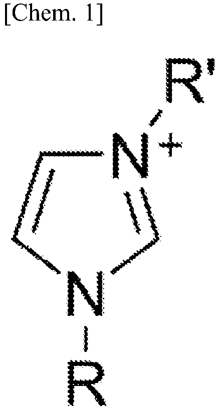

Examples of the counteranion include Cl⁻, Br⁻, I⁻, BF₄⁻, PF₆⁻, FSI((FSO₂)₂N⁻), and TFSI ((CF₃SO₂)₂N⁻).

The ionic liquid 17 is preferably an imidazolium salt, and specifically, the ionic liquid 17 preferably contains a 1-alkyl-3-methylimidazolium bis(trifluoromethanesulfonyl)imide. The alkyl group contained in the compound may be, for example, a methyl group, an ethyl group, a butyl group, a pentyl group, a heptyl group, an octyl group, a nonyl group, a decyl group, or the like. Among these, the alkyl group is preferably a butyl group. That is, the ionic liquid 17 preferably contains 1-butyl-3-methylimidazolium bis(trifluoromethanesulfonyl)imide. In this case, the ionic liquid 17 is preferably composed only of 1-butyl-3-methylimidazolium bis(trifluoromethanesulfonyl)imide, but may contain other 1-alkyl-3-methylimidazolium bis(trifluoromethanesulfonyl)imides in addition to the above compound. In a case where the ionic liquid 17 contains a plurality of types of 1-alkyl-3-methylimidazolium bis(trifluoromethanesulfonyl)imides, the content of 1-butyl-3-methylimidazolium bis(trifluoromethanesulfonyl)imide is preferably 50% by mass or more of the total mass of the ionic liquid 17.

In the catalyst particle 12, the volume of the ionic liquid 17 is preferably 10% or more and 50% or less, and more preferably 10% or more and 30% or less, of the mesopore volume of the electroconductive support 15. The mesopore volume, that is, the pore volume in the mesopore region, is the total pore volume from 2 nm to 100 nm. The mesopore volume can be determined, for example, by a low-temperature nitrogen adsorption method. The mesopore volume in the electroconductive support may be 2 to 50 nm.

If the volume ratio of the ionic liquid 17 is 10% or more, proton conduction between the polymer electrolyte 13 and the metal particles 16 via the ionic liquid 17 tends to be favorable. In particular, in the electrode catalyst layer of the air electrode, sufficient oxygen reduction activity is obtained. Furthermore, if the volume ratio of the ionic liquid 17 is 50% or less, the amount of the ionic liquid 17 does not become excessive. The ionic liquid 17 has a function that allows protons to pass therethrough, but to a lesser extent than that of the polymer electrolyte 13, and if the amount of the ionic liquid 17 is too large, the separation between the catalyst particles 12 and the polymer electrolyte 13 may increase, leading to an increase in resistance. On the other hand, if the volume ratio of the ionic liquid 17 is 50% or less, an increase in resistance due to an excessive amount of the ionic liquid 17 is suitably suppressed. As a result of including the ionic liquid 17 as described above in the electrode catalyst layer 10, it is possible to suppress a decrease in proton transport to the catalyst even under low-humidity conditions.

### (Inorganic Film 18)

The inorganic film 18 covers the surface of the electroconductive support 15 and the surface of the metal particles 16 via the ionic liquid 17, which is in contact with the surface of the electroconductive support 15 and metal particles 16. It is sufficient for a portion of the surface of the electroconductive support to be covered with the inorganic film 18, and it is sufficient for a portion of the surface of the metal particles to be covered with the inorganic film 18. The inorganic film 18 mainly covers the metal particles 16 via the ionic liquid 17. The thickness of the inorganic film 18 may be uniform or non-uniform.

The material of the inorganic film 18 may be an inorganic material containing Si. Among such materials, the material of the inorganic film 18 preferably contains silica (silicon oxide), and particularly preferably contains silica obtained by hydrolysis and dehydration condensation of tetraethoxysilane. As a result of using such silica, because the inorganic film 18 is formed into a multilayer structure composed of a silica film, the ionic liquid 17 is easily retained inside the inorganic film 18. Note that the composition of silica generated from tetraethoxysilane is (SiO₂)ₙ.

The film thickness of the inorganic film 18 may be 1 nm or more and 100 nm or less, preferably 10 nm or more and 50 nm or less, and more preferably 20 nm or more and 40 nm or less. If the film thickness of the inorganic film 18 is 1 nm or more, the inorganic film 18 is easily formed. Furthermore, if the film thickness of the inorganic film 18 is 100 nm or less, gaps between the layers in the multilayer structure are likely to be sufficiently ensured. The thickness of the inorganic film 18 may be uniform or non-uniform.

### (Composition of Catalyst Particle)

The ratio of the mass of the metal particles to the total mass of the electroconductive support and the metal particles of the catalyst particle is not particularly limited, but can be, for example, 10 to 70% by mass.

### (Polymer Electrolyte)

An electrolyte having proton conductivity can be used for the polymer electrolyte 13 contained in the electrode catalyst layer 10. As the polymer electrolyte, for example, a fluorine-containing polymer electrolyte and a hydrocarbon-based polymer electrolyte can be used. A polymer electrolyte having a tetrafluoroethylene skeleton can be used as the fluorine-containing polymer electrolyte. Note that Nafion (registered trademark) manufactured by DuPont is an example of a polymer electrolyte having a tetrafluoroethylene skeleton. Examples of the hydrocarbon-based polymer electrolyte include sulfonated polyether ketones, sulfonated polyether sulfones, sulfonated polyether ether sulfones, sulfonated polysulfides, and sulfonated polyphenylenes.

The polymer electrolyte contained in the polymer electrolyte membrane 11 and the polymer electrolyte 13 contained in the electrode catalyst layer 10 may be the same electrolyte, or may be different electrolytes. However, in consideration of the interface resistance at the interface between the polymer electrolyte membrane 11 and the electrode catalyst layer 10, and the dimensional change ratio between the polymer electrolyte membrane 11 and the electrode catalyst layer 10 in the case of a change in humidity, it is preferable that the polymer electrolyte contained in the polymer electrolyte membrane 11 and the polymer electrolyte 13 contained in the electrode catalyst layer 10 are the same electrolyte, or are polymer electrolytes with similar thermal expansion coefficients.

The content of the polymer electrolyte 13 in the electrode catalyst layer 10 is preferably 40 parts by mass or more and 140 parts by mass or less when the content of the electroconductive support 15 in the electrode catalyst layer 10 is 100 parts by mass. If the content of the polymer electrolyte 13 is 40 parts by mass or more, a decrease in proton conductivity due to defects in the proton conduction pathway can be suppressed. As a result, it becomes easier to ensure a balance between the proton conductivity and the electron conductivity in the electrode catalyst layer 10. In addition, if the content of the polymer electrolyte 13 is 140 parts by mass or less, because a three-phase interface is likely to be formed in the electrode catalyst layer 10, the catalyst activity can be enhanced.

### (Fibrous Material)

As the fibrous material 14, any material can be used as long as the material is capable of maintaining a fibrous shape without being attacked by the metal particles 16 and the polymer electrolyte 13. In order to reduce the resistance of the electrode catalyst layer 10, the fibrous material 14 preferably exhibits electron conductivity and/or proton conductivity.

As the fibrous material 14 exhibiting electron conductivity, carbon fibers such as carbon fiber, carbon nanofiber, and carbon nanotubes can be used. Preferable examples include carbon nanofiber and carbon nanotubes.

Examples of the fibrous material 14 exhibiting proton conductivity include fibers obtained by processing a polymer electrolyte into a fibrous form. As the polymer electrolyte, fluororesins and hydrocarbon-based resins can be used, and examples of the fluororesin include Nafion (manufactured by Chemours, registered trademark), and examples of the hydrocarbon-based resin include engineering plastics or materials obtained by introducing a sulfonic acid group into a copolymer thereof. Moreover, acid-doped polybenzazoles that exhibit proton conductivity by doping with an acid can also be preferably used.

Furthermore, examples of the fibrous material 14 include resin fibers having a basic functional group capable of interacting with an acidic substance in the main chain skeleton or side chain functional group. These materials are capable of exhibiting proton conductivity because the surface of the resin fiber is coated with the polymer electrolyte as a result of interactions with the acidic substance contained in the polymer electrolyte 13. Examples of the basic functional group capable of interacting with an acidic substance include a =N- group, a -NH₂ group, a >NH group, a >N- group, an ammonium group, an amine derivative, a pyridine derivative, an imidazole derivative, and an imidazolium group. Specific examples of the resin fiber include polybenzimidazole (PBI), polybenzoxazole, polybenzothiazole, polyvinylimidazole, and polyallylamine, and in particular, polybenzimidazole (PBI) having an azole structure is preferable from the viewpoint of proton conductivity and processability.

As the fiber diameter of the fibrous material 14, the average fiber diameter and/or the peak of the fiber diameter distribution is preferably 100 to 400 nm, more preferably 150 to 250 nm, and still more preferably 180 to 220 nm. By setting the fiber diameter in this range, when contained in the electrode catalyst layer, the voids in the electrode catalyst layer can be increased, and a decrease in proton conductivity can be suppressed, which enables high output.

In a case where the average fiber diameter and/or the peak of the fiber diameter distribution of the polymer fiber is smaller than the above range, the voids may become small, which can prevent sufficient water drainage and gas diffusivity from being ensured. In this case, water can remain in the electrode catalyst layer 10, which promotes a decrease in output and deterioration of the electrode catalyst layer. In a case where the average fiber diameter and/or the peak of the fiber diameter distribution of the polymer fiber is larger than the above range, the proton conduction pathways in the polymer electrolyte 13 and the electron conduction pathways in the electroconductive support 15 may be blocked, and the resistance can sometimes increase.

Furthermore, as the fiber length of the fibrous material 14, it is preferable that the peak of the fiber length distribution is 1 to 100 µm, more preferably 5 to 50 µm, and even more preferably 5 to 30 µm. As a result of setting the peak of the fiber length distribution in this range, the occurrence of cracks when forming the electrode catalyst layer 10 can be suppressed, and consequently, the durability of the electrode catalyst layer and the membrane electrode assembly can be enhanced. In addition, the voids in the electrode catalyst layer can be increased, and high output can be achieved.

The fiber diameter of the fibrous material 14 is obtained by measuring, for example, the diameter of the fibrous material 14 that is exposed in a cross-section of the electrode catalyst layer 10 when the cross-section is observed using a scanning electron microscope (SEM). When the fibrous material 14 is cut diagonally, the shape of the exposed cross-section can sometimes be an oval shape. In this case, the fiber diameter of the fibrous material 14 can be obtained by measuring the diameter of a perfect circle fitted along the short axis. The average fiber diameter and/or the peak of the fiber diameter distribution can be obtained by measuring the fiber diameter of the fibrous material 14 at a plurality of positions, such as 50 positions, and then calculating the arithmetic mean and/or creating a frequency distribution.

The content of the fibrous material 14 in the electrode catalyst layer 10, with respect to 100 parts by mass of the electroconductive support 15, is preferably an approximately equal amount or less, and can be approximately 5 to 100 parts by mass. If the content of the fibrous material 14 in the electrode catalyst layer 10 is small, the effect of reducing proton conduction resistance and improving gas diffusivity may not be sufficiently obtained, and cracks may occur when forming the electrode catalyst layer 10, leading to a decrease in durability during long-term operation. On the other hand, if the content of the fibrous material 14 in the electrode catalyst layer 10 is large, the catalyst reaction may be inhibited, leading to a reduction in battery performance.

As a result of including the fibrous material 14 as described above in the electrode catalyst layer 10, cracks do not occur during the formation of the electrode catalyst layer 10, and it is possible to increase the pores in the electrode catalyst layer 10.

### (Si Amount in Electrode Catalyst Layer)

In the present embodiment, the ratio of the number of silicon atoms to the total number of atoms of carbon, nitrogen, oxygen, fluorine, silicon, sulfur, and platinum elements in the electrode catalyst layer, as obtained by energy dispersive X-ray spectroscopy, is 0.5 at% or more to 10 at%.

The ratio of the number of silicon atoms to the total number of atoms of carbon, nitrogen, oxygen, fluorine, silicon, sulfur, and platinum elements can be measured, for example, by performing elemental mapping using a transmission electron microscope equipped with an energy dispersive X-ray spectrometer (TEM-EDX). The acceleration voltage of X-rays in the TEM-EDX is preferably 200 kV. With such an acceleration voltage, an electron beam can be transmitted through a thickness of about 100 nm in a specific region, and elemental information of the electrode catalyst layer can be obtained. The shape of the region for elemental mapping using TEM-EDX (observation area) can be quadrangular, such as a 150 nm × 150 nm square or a 30 nm × 50 nm rectangle. The shape of the region for elemental mapping using TEM-EDX (observation area) is preferably an observation area where the catalyst particles 12 occupy 20% or more of the area.

The catalyst layer subjected to TEM-EDX is processed into a thin section of about 100 nm. For the processing into a thin section, for example, known methods such as a focused ion beam and an ultramicrotome can be used. When processing into a thin section, it is particularly preferable to perform the processing while cooling the electrode catalyst layer 10 in order to reduce damage to the polymer electrolyte 13 constituting the electrode catalyst layer 10.

### (Effects)

As a result of diligent studies on the power generation performance and durability of polymer electrolyte fuel cells, the inventor found that the proton conductivity in the electrode catalyst layer greatly affects the power generation performance, and that coating the metal particles, which are the catalyst, and the electroconductive support supporting the catalyst with an ionic liquid improves the proton conductivity. Furthermore, it was found that coating the metal particles and the electroconductive support with an inorganic film containing Si suppresses the outflow of the ionic liquid and coarsening of the catalyst particles, leading to high power generation performance being exhibited over a long period.

According to the present embodiment, as shown in Fig. 3, because the inorganic film 18 covers the metal particles 16, elution of the metal particles 16 into the polymer electrolyte 13 surrounding the catalyst particles 12 in the electrode catalyst layer is suppressed. On the other hand, if the inorganic film 18 directly covers the metal particles 16, contact between the polymer electrolyte 13, which conducts protons, and the metal particles 16, which act as the electrode reaction catalyst, is hindered. In contrast, in the configuration of the present embodiment, because the ionic liquid 17, which allows protons to pass therethrough, is interposed between the inorganic film 18 and the metal particles 16, protons are conducted via the ionic liquid 17. In addition, if the ionic liquid 17 permeates into the gaps in the inorganic film 18, the ionic liquid 17 in the inorganic film 18 also contributes to proton conduction. If the metal particles 16 have exposed portions not covered by the ionic liquid 17 and the inorganic film 18, it is advantageous from the viewpoint of electron conduction.

Further, as shown in Fig. 2, when the surface of the electroconductive support 15 is in contact with the ionic liquid 17, this contributes to the improvement of proton conductivity in the electrode catalyst layer 10, and when the inorganic film 18 covers the electroconductive support 15 via the ionic liquid, this hinders the movement of the metal particles 16 and contributes to the suppression of coarsening of the metal particles 16. In addition, if the electroconductive support 15 has exposed portions not covered by the ionic liquid 17 and the inorganic film 18, it is advantageous from the viewpoint of electron conduction.

Also, by setting the ratio of the number of silicon atoms to the total number of atoms of carbon, nitrogen, oxygen, fluorine, silicon, sulfur, and platinum elements in the electrode catalyst layer, as obtained by energy dispersive X-ray spectroscopy, to 0.5 at% or more and 10 at% or less, a polymer electrolyte fuel cell that exhibits high power generation performance and has excellent durability can be obtained.

If the ratio of the number of silicon atoms to the total number of atoms of carbon, nitrogen, oxygen, fluorine, silicon, sulfur, and platinum elements in the electrode catalyst layer 10, as obtained by energy dispersive X-ray spectroscopy, is less than 0.5 at%, this means that the amount of the inorganic film 18 that suppresses the outflow of the ionic liquid 17 that enhances the proton conductivity of the electrode catalyst layer 10 and the coarsening of the metal particles 16 is too small. If the ratio of the number of silicon atoms to the total number of atoms of carbon, nitrogen, oxygen, fluorine, silicon, sulfur, and platinum elements in the electrode catalyst layer, as obtained by energy dispersive X-ray spectroscopy, is more than 10 at%, this means that the amount of the inorganic film 18 is too large. If the amount of the inorganic film 18 is too large, the conduction of protons and electrons is inhibited in some cases.

In the catalyst particles 12, the weight ratio of the inorganic film 18 is preferably 0.01 or more and 0.2 or less. If the weight ratio of the inorganic film 18 is 0.01 or more, the inorganic film 18 is formed on the surface of the catalyst particles 12 to an extent that sufficiently suppresses the elution of the metal particles 16. Moreover, the ionic liquid 17 is easily retained in the inorganic film 18. If the weight ratio of the inorganic film 18 is 0.2 or less, the film thickness and formation range of the inorganic film 18 do not become too large, such that contact between the metal particles 16 and the ionic liquid 17 can be ensured to an extent that suitable proton conduction is obtained. The weight ratio of the inorganic film 18 can be determined using, for example, ICP emission spectrometry (ICP-OES or ICP-AES), X-ray fluorescence spectroscopy (XRF), or X-ray photoelectron spectroscopy (XPS).

As described above, by including the inorganic film 18, coarsening of the metal particles 16 and outflow of the ionic liquid 17 can be suppressed, and durability can be improved.

### (Polymer Electrolyte Membrane)

Examples of the polymer electrolyte used for the polymer electrolyte membrane 11 are the same as the polymer electrolyte in the electrode catalyst layer. That is, the polymer electrolyte may be any polymer electrolyte having proton conductivity, such as a fluorine-containing polymer electrolyte or a hydrocarbon-based polymer electrolyte. Example of the fluorine-containing polymer electrolyte is Nafion (registered trademark: manufactured by DuPont), Flemion (registered trademark: manufactured by Asahi Glass Co., Ltd.), and Gore-Select (registered trademark: manufactured by Japan Gore-Tex Inc.). Examples of the hydrocarbon-based polymer electrolyte include engineering plastics and engineering plastics into which sulfonic acid groups have been introduced.

### (Method for Producing Catalyst Particles)

The catalyst particles 12 can be produced by supporting the metal particles 16 on the electroconductive support 15 by a known method to produce a catalyst-loaded support, impregnating the catalyst-loaded electroconductive support with the ionic liquid 17 to form a precursor, and then forming the inorganic film 18 on the surface of the precursor. The inorganic film 18 is formed using a known film formation method such as a sol-gel method. As a result of using a production method in which the inorganic film 18 is formed after impregnating the catalyst-loaded support with the ionic liquid 17, it is possible to form the inorganic film 18 without requiring a surfactant. Therefore, it is possible to avoid heat treatment and suppress deterioration of the electroconductive support 15, and to suppress a decrease in the durability of the electrode catalyst layer 10. Further, the inorganic film can be coated on the surfaces of the electroconductive support and the metal particles via the ionic liquid.

### [Configuration of Membrane Electrode Assembly]

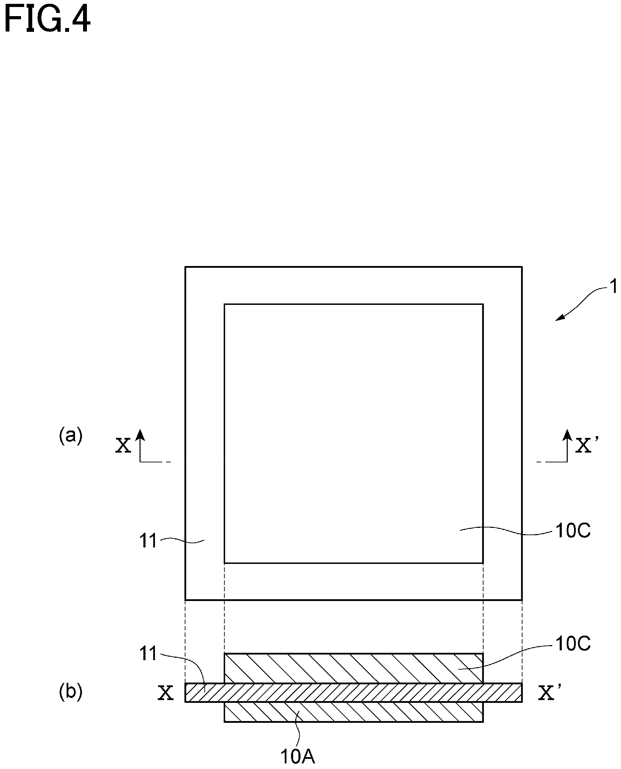

Next, a specific configuration of a membrane electrode assembly 1 including the electrode catalyst layer 10 according to the present embodiment will be described with reference to Fig. 4. Fig. 4 shows a configuration example of the membrane electrode assembly according to the present embodiment, where Fig. 4(a) is a plan view of the membrane electrode assembly when viewed from the oxygen electrode side of the electrode catalyst layer 10, and Fig. 4(b) is a cross-sectional view taken along line X-X' in Fig. 4(a).

As shown in Fig. 4, a membrane electrode assembly 1 includes a polymer electrolyte membrane 11, and electrode catalyst layers 10C and 10A bonded on respective sides of the polymer electrolyte membrane 11. In the present embodiment, the electrode catalyst layer 10C formed on the upper surface of the polymer electrolyte membrane 11 is a cathode-side electrode catalyst layer constituting the oxygen electrode, and the electrode catalyst layer 10A formed on the lower surface of the polymer electrolyte membrane 11 is an anode-side electrode catalyst layer constituting the fuel electrode. Hereinafter, the pair of electrode catalyst layers 10C and 10A will sometimes be referred to as "electrode catalyst layers 10" when there is no need to distinguish between them. The outer peripheral portion of the electrode catalyst layer 10 may be sealed by a gasket 21 or the like.

### [Method for Manufacturing Electrode Catalyst Layer and Membrane Electrode Assembly]

Hereinafter, a method for manufacturing the electrode catalyst layer 10 and membrane electrode assembly 1 mentioned above will be described. First, a catalyst ink is prepared. The catalyst ink is prepared by mixing at least the catalyst particles 12, the polymer electrolyte 13, and the fibrous material 14 described above with a dispersion medium, and then subjecting the mixture to a dispersion treatment. The dispersion treatment can be performed using, for example, a planetary ball mill, a bead mill, or an ultrasonic homogenizer.

The solvent used as the dispersion medium of the catalyst ink may be any solvent as long as the solvent does not erode the electroconductive support 15, the metal particles 16, the ionic liquid 17, the inorganic film 18, the polymer electrolyte 13, and the fibrous material 14, and is capable of dissolving or dispersing the polymer electrolyte 13 as a fine gel in a highly fluid state. The solvent may contain water. It is desirable that the catalyst ink contains at least a volatile liquid organic solvent, but those using a lower alcohol as a solvent have a high risk of ignition, so when using such a solvent, it is preferable to use a mixed solvent with water. The amount of water added is not particularly limited as long as the polymer electrolyte 13 does not separate and cause cloudiness or gelation.

The electrode catalyst layer 10 is formed on a substrate by applying the prepared catalyst ink to the substrate, and then drying the catalyst ink such that the solvent component is removed from the coating film of the catalyst ink. As the substrate, the polymer electrolyte membrane 11, or a transfer substrate, a gas diffusion layer 22, or the like, can be used. In a case where the polymer electrolyte membrane 11 is used as the substrate, for example, the electrode catalyst layer 10C can be formed by directly applying the catalyst ink to the surface of the polymer electrolyte membrane 11, and then removing the solvent from the coating film of the catalyst ink. Then, after directly applying the catalyst ink to the surface on the opposite side of the polymer electrolyte membrane 11 so as to sandwich the polymer electrolyte membrane 11 and face the electrode catalyst layer 10A, the electrode catalyst layer 10A is formed by removing the solvent from the coating film of the catalyst ink, which allows the membrane electrode assembly 1 to be obtained.

In a case where a transfer substrate is used, for example, a catalyst layer-attached transfer substrate is prepared by applying and drying a catalyst ink on the transfer substrate. Then, by performing heating and pressurization in a state where the surface of the electrode catalyst layer 10 of the catalyst layer-attached transfer substrate and the polymer electrolyte membrane 11 are in contact with each other, the electrode catalyst layer 10 and the polymer electrolyte membrane 11 are joined together. The membrane electrode assembly 1 can be produced by joining electrode catalyst layers 10 to the opposing two sides of the polymer electrolyte membrane 11, and then removing the transfer substrate.

Furthermore, in a case where a gas diffusion layer is used as the substrate, for example, a catalyst layer-attached gas diffusion layer is prepared applying a catalyst ink to the surface of the gas diffusion layer, and then drying the catalyst ink. Then, by performing heating and pressurization in a state where the surface of the electrode catalyst layer 10 of the catalyst layer-attached gas diffusion layer and the polymer electrolyte membrane 11 are in contact with each other, the electrode catalyst layer 10 and the polymer electrolyte membrane 11 are joined together. The membrane electrode assembly 1 can be produced by joining electrode catalyst layers 10 to the opposing two sides of the polymer electrolyte membrane 11.

Various coating methods can be used to apply the catalyst ink to the substrate. Examples of the coating method include die coating, roll coating, curtain coating, spray coating, and squeegeeing. It is preferable to use die coating as the coating method. Die coating is preferable in that the film thickness is stable in the middle of the coating period and intermittent coating is possible. As the method of drying the coating film of the catalyst ink, for example, drying using a hot air oven, IR (far infrared) drying, drying using a hot plate, and drying under reduced pressure can be used. The drying temperature is 40°C or more and 200°C or less, and is preferably approximately 40°C or more and 120°C or less. The drying time is 0.5 minutes or more and 1 hour or less, and is preferably about 1 minute or more and 30 minutes or less.

In a case where the electrode catalyst layer 10 is formed on a transfer substrate or a gas diffusion layer, the pressure and temperature applied to the electrode catalyst layer 10 during transfer of the electrode catalyst layer 10 affect the power generation performance of the membrane electrode assembly 1. To obtain the membrane electrode assembly 1 having high power generation performance, the pressure applied to the electrode catalyst layer 10 is preferably 0.1 MPa or more and 20 MPa or less. As a result of the pressure being 20 MPa or less, excessive compression of the electrode catalyst layer 10 is suppressed. As a result of the pressure being 0.1 MPa or more, the decrease in the power generation performance due to a reduction in the joining properties between the electrode catalyst layer 10 and the polymer electrolyte membrane 11 is suppressed. In consideration of improving the joining properties of the interface between the polymer electrolyte membrane 11 and the electrode catalyst layer 10, and suppressing interface resistance, the temperature at the time of joining is preferably near the glass transition temperature of the polymer electrolyte membrane 11 or the polymer electrolyte 13 contained in the electrode catalyst layer 10.

As the transfer substrate, for example, a sheet body formed of a polymer film and a fluororesin can be used. Fluororesins have excellent transferability. Examples of fluororesins include ethylene tetrafluoroethylene copolymer (ETFE), tetrafluoroethylene-hexafluoropropylene copolymer (FEP), tetrafluoroperfluoroalkyl vinyl ether copolymer (PFA), and polytetrafluoroethylene (PTFE). Examples of the polymer forming the polymer film include polyimide, polyethylene terephthalate, polyamide (Nylon (registered trademark)), polysulfone, polyethersulfone, polyphenylene sulfide, polyether ether ketone, polyether imide, polyarylate, and polyethylene naphthalate.

The thickness of the electrode catalyst layer 10 is preferably 2 µm or more and 20 µm or less. In a case where the thickness is greater than 20 µm, cracks are likely to occur, and when used in a fuel cell, the diffusion properties of the gas and the generated water, and the conductivity decrease, resulting in a decrease in output. Furthermore, when the thickness is less than 2 µm, there is a tendency for the layer thickness to vary, and the catalyst particles 12 and the polymer electrolyte 13 inside are likely to become non-uniform. Cracking on the surface of the electrode catalyst layer 10 and non-uniformity in the thickness can lead to a high probability of the durability being adversely affected when used as a fuel cell and operated over a long time, which is not preferable.

The thickness of the electrode catalyst layer 10 can be measured by, for example, observing the cross-section of the membrane electrode assembly 1 using a scanning electron microscope (SEM). For example, the thickness of the electrode catalyst layer can be measured by performing the measurement within a field of view that includes the entire electrode catalyst layer at an observation magnification of about 1,000 to 10,000 times. In order to measure the thickness within the catalyst layer without bias, it is preferable to perform the same measurement with respect to at least 20 or more observation points. The method of exposing the cross-section of the membrane electrode assembly 1 includes, for example, known methods such as ion milling and ultramicrotomy.

Here, by adjusting the blending ratio of the fibrous material, the blending ratio of the polymer electrolyte, the solvent composition of the catalyst ink, the dispersion strength when adjusting the catalyst ink, and the heating temperature and heating rate of the coated catalyst ink, the electrode catalyst layer 10 can be provided with sufficient gas diffusion properties and proton conductivity.

### [Configuration of Polymer Electrolyte Fuel Cell]

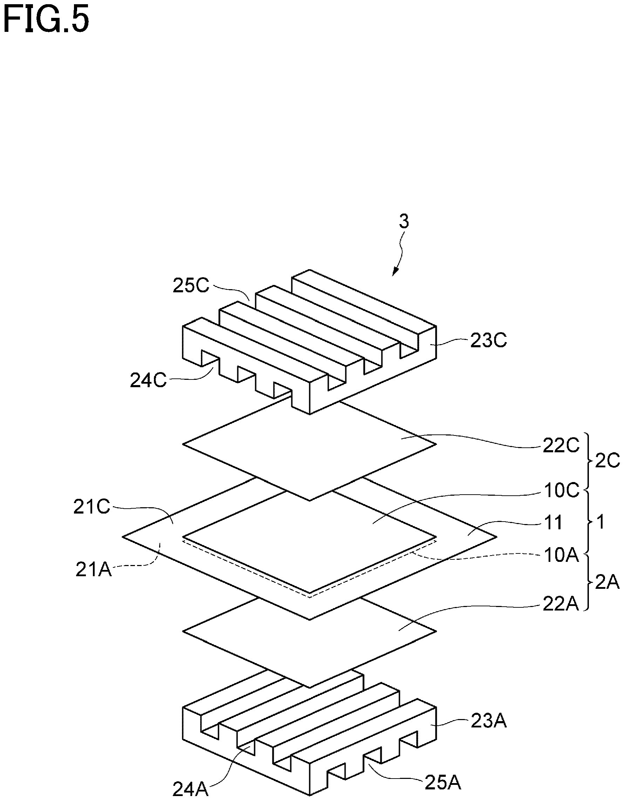

Next, a specific configuration example of a polymer electrolyte fuel cell 3 provided with the membrane electrode assembly 1 according to the present embodiment will be described with reference to Fig. 5. Fig. 5 is an exploded perspective view of an example configuration of the polymer electrolyte fuel cell 3 equipped with the membrane electrode assembly 1. Note that Fig. 5 is a configuration example of a single cell, and the polymer electrolyte fuel cell 3 is not limited to this configuration and may have a configuration in which a plurality of single cells are stacked.

As shown in Fig. 5, the polymer electrolyte fuel cell 3 includes the membrane electrode assembly 1, a gas diffusion layer 22C, and a gas diffusion layer 22A. The gas diffusion layer 22C is arranged facing the electrode catalyst layer 10C, which is the cathode-side electrode catalyst layer on the oxygen electrode side of the membrane electrode assembly 1. Furthermore, the gas diffusion layer 22A is arranged facing the electrode catalyst layer 10A, which is the anode-side electrode catalyst layer on the fuel electrode side of the membrane electrode assembly 1. Moreover, the electrode catalyst layer 10C and the gas diffusion layer 22C constitute an oxygen electrode 2C, and the electrode catalyst layer 10A and the gas diffusion layer 22A constitute a fuel electrode 2A. Furthermore, an oxygen electrode-side gasket 16C and a fuel electrode-side gasket 16A are arranged in order to prevent gas leakage from the peripheral sections where the electrode catalyst layers 10 of the polymer electrolyte membrane 11 are not joined.

In addition, the polymer electrolyte fuel cell 3 includes a separator 23C, which is arranged facing the oxygen electrode 2C, and a separator 23A, which is arranged facing the fuel electrode 2A. The separator 23C includes gas flow paths 24C for passage of a reaction gas, which are formed on the surface facing the gas diffusion layer 22C, and cooling water flow paths 25C for passing a coolant, which are formed on the opposite surface to the surface in which the gas flow paths 24C are formed. Furthermore, the separator 23A has the same structure as the separator 23C, and includes gas flow paths 24A that are formed on the surface facing the gas diffusion layer 22A, and cooling water flow paths 25A that are formed on the opposite surface to the surface in which the gas flow paths 24A are formed. The separators 23C and 23A are made of a conductive and gas impermeable material.

Further, in the polymer electrolyte fuel cell 3, power is generated by supplying an oxidant such as air or oxygen to the oxygen electrode 2C through the gas flow paths 24C of the separator 23C, and supplying a fuel gas containing hydrogen or an organic fuel to the fuel electrode 2A through the gas flow paths 24A of the separator 23A.

As a result of adopting the membrane electrode assembly 1 according to the present embodiment, sufficient drainage properties, gas diffusivity, and proton conductivity are achieved, and high power generation performance can be exerted for a long period.

That is, according to the present invention, it is possible to provide the electrode catalyst layer 10, the membrane electrode assembly 1, and the polymer electrolyte fuel cell 3 that have sufficient proton conductivity during operation of the polymer electrolyte fuel cell, and which are capable of exhibiting high power generation performance over the long term. Therefore, the present invention is suitable for use in stationary cogeneration systems and fuel cell vehicles using polymer electrolyte fuel cells, and the like, and further, in hydrogen production electrolysis systems using membrane electrode assemblies, and has a high industrial utility value.

### Examples

Hereinafter, membrane electrode assemblies according to examples based on the present invention will be described.

### (Example 1)

### <Production of Catalyst Particles>

Platinum-supported carbon (Pt mass ratio 50% by mass) in which platinum particles were supported on a highly crystallized carbon support was added to acetonitrile, and further, an ionic liquid in an amount corresponding to 60% of the mesopore volume of the platinum-supported carbon was added. Note that the magnitude of the mesopore volume of the platinum-supported carbon (electroconductive support) is substantially equal to the magnitude of the mesopore volume of the electroconductive support. The mixture was subjected to ultrasonic dispersion for 30 minutes, stirred overnight using a stirrer, and then the acetonitrile was removed with an evaporator to obtain platinum-supported carbon impregnated with the ionic liquid. As the ionic liquid, a liquid consisting only of 1-butyl-3-methylimidazolium bis(trifluoromethanesulfonyl)imide was used. The mesopore volume of the platinum-supported carbon was determined as the pores from 2 nm to 100 nm using a low-temperature nitrogen adsorption method.

Next, the platinum-supported carbon impregnated with the ionic liquid was added to water, and after ultrasonic stirring, a mixed solution containing tetraethoxysilane (TEOS) and ethanol was added. Thereafter, sodium hydroxide was added and stirred for 2 hours, and then a separated product was obtained using a centrifuge. Then, the separated product was dried at 80°C for 6 hours to obtain the catalyst particles of Example 1. The catalyst particles had an inorganic film made of silica.

In the above, the coating amount of the inorganic film on the catalyst particles was adjusted by the amount of TEOS such that the weight ratio of the inorganic film (weight of silica / total weight of silica and platinum-supported carbon) was 0.1.

### <Preparation of Membrane Electrode Assembly>

A catalyst ink was prepared by carrying out dispersion processing with respect to a mixture in which the catalyst particles, the polymer electrolyte, the fibrous material, and the dispersion medium had been mixed. The following materials were used for each material other than the catalyst particles.

Polymer electrolyte: fluorine-containing polymer electrolyte (Nafion (registered trademark) dispersion liquid, manufactured by Wako Pure Chemical Industries, Ltd.)
Fibrous material: resin fiber having an azole structure (average fiber length 20 µm, average fiber diameter 220 nm)
Dispersion medium: mixed liquid of water and 1-propanol in a mass ratio of 1:1

The blending amounts of the polymer electrolyte and the fibrous material were, assuming a blending amount of the electroconductive support in the catalyst particles in the catalyst ink of 100 parts by mass, 70 parts by mass of the polymer electrolyte and 20 parts by mass of the fibrous material. The blending amount of the dispersion medium was an amount in which the solid content concentration in the catalyst ink became 10% by mass. The dispersion processing was carried out using a planetary ball mill at a rotation speed of 600 rpm for 60 minutes. At this time, zirconia balls with a diameter of 2 mm were added to a level of about one third of a zirconia container.

Next, using a die coater, a coating film was formed by applying the catalyst ink to one side of the polymer electrolyte membrane (Nafion (registered trademark) 211, manufactured by DuPont) to a thickness of 100 µm. The shape of the coating film was square, and the length of one side was 50 mm. Then, drying treatment was carried out using an oven at 80°C to volatilize the dispersion medium contained in the coating film, thereby forming the air electrode catalyst layer.

Next, a coating film was formed by applying the catalyst ink to the side opposite to the side on which the air electrode catalyst layer was formed in the polymer electrolyte membrane to a thickness of 30 µm. The shape of the coating film was square, the length of one side was 50 mm, and the coating film was formed at a position opposite to the air electrode catalyst layer. Then, drying treatment was carried out using an oven at 80°C to volatilize the dispersion medium contained in the coating film, thereby forming the fuel electrode catalyst layer.

As a result, a membrane electrode assembly provided with the electrode catalyst layer of Example 1 was obtained.

### (Example 2)

The membrane electrode assembly of Example 2 was obtained using the same materials and steps as in Example 1, except that the amount of TEOS added was changed so that the weight ratio of the inorganic film was 0.2 in the catalyst particle production step.

### (Example 3)

The membrane electrode assembly of Example 3 was obtained using the same materials and steps as in Example 1, except that the amount of TEOS added was changed so that the weight ratio of the inorganic film was 0.01 in the catalyst particle production step.

### (Example 4)

The membrane electrode assembly of Example 4 was obtained using the same method as in Example 1, except that carbon nanofibers (VGCF-H (registered trademark), manufactured by Showa Denko Packaging Co., Ltd., average fiber length 7 µm, average fiber diameter 150 nm) were added as the fibrous material in the catalyst ink preparation ink.

### (Comparative Example 1)

The membrane electrode assembly of Comparative Example 1 was obtained using the same materials and steps as in Example 1, except that the amount of TEOS added was changed so that the weight ratio of the inorganic film was 0.3 in the catalyst particle production step.

### (Comparative Example 2)

The membrane electrode assembly of Comparative Example 2 was obtained using the same materials and steps as in Example 1, except that the formation of the inorganic film on the platinum-supported carbon was not performed. That is, the catalyst particles of Comparative Example 2 do not have an inorganic film.

### (Comparative Example 3)

The membrane electrode assembly of Comparative Example 3 was obtained using the same materials and steps as in Example 1, except that the impregnation of the ionic liquid and the formation of the inorganic film on the platinum-supported carbon was not performed. That is, the catalyst particles of Comparative Example 3 consist only of platinum-supported carbon and do not have the ionic liquid and the inorganic film.

### <Measurement of Ratio of Number of Silicon Atoms>

The ratio of the number of silicon atoms to the total number of atoms of carbon, nitrogen, oxygen, fluorine, silicon, sulfur, and platinum elements in the electrode catalyst layer, was measured using energy dispersive X-ray spectroscopy. Specifically, a thin section of the electrode catalyst layer was firstly obtained using a cryo-ultramicrotome that performs processing while cooling the electrode catalyst layer. Then, an elemental mapping was performed using a transmission electron microscope equipped with energy-dispersive X-ray spectroscopy (TEM-EDX) to obtain the element ratio of each element, and the ratio of the number of silicon atoms was calculated. The acceleration voltage was set to 200 kV. The observation area was a range of 150 nm x 150 nm, and the platinum-supported carbon occupied 20% or more of the area of the field of view.

### <Evaluation of Power Generation Performance>

To measure the power generation performance, a JARI standard cell was used as the evaluation single cell in accordance with the "Cell Evaluation and Analysis Protocol" published by the New Energy and Industrial Technology Development Organization (NEDO), and gas diffusion layers (SIGRACET(R) 22BB, manufactured by SGL Carbon), gaskets, and separators were disposed on the opposing two sides of the membrane electrode assembly and clamped together to provide a predetermined surface pressure. Then, an I-V measurement described in the "Cell Evaluation Analysis Protocol" was performed. Note that the cell temperature at the time of the measurement was set to 80°C. The humidification conditions were a relative humidity of the fuel electrode of 88% RH and a relative humidity of the air electrode of 42% RH. Furthermore, hydrogen was used as the fuel gas, and air was used as the oxidant gas. At this time, hydrogen was allowed to flow at a flow rate such that the hydrogen utilization rate was 70%, and air was allowed to flow at a flow rate such that the oxygen utilization rate was 40%.

### <Evaluation of Durability>

For each Example and each Comparative Example, using the evaluation single cell used in the evaluation of power generation performance described above, a load response simulated potential cycle test described in the "Cell Evaluation Analysis Protocol" published by the New Energy and Industrial Technology Development Organization (NEDO) was performed. An IV measurement was performed under the same conditions as the evaluation of power generation performance described above, both before and after the test.

### <Comparison Results>

Table 1 shows the ratio of the number of silicon atoms in the cathode side electrode catalyst layer, the power generation performance, and the durability of the fuel cells provided with the membrane electrode assembly 1 of Examples 1 to 4 and Comparative Examples 1 to 3. Note that, in terms of the power generation performance, those cases where the voltage was 0.65 V or more when the current was 35 A were rated "Excellent", those cases where the voltage was less than 0.65 V when the current was 35 A but the voltage was 0.65 V or more when the current was 25 A were rated "Good", and those cases where the voltage was less than 0.65 V when the current was 25 A were rated "Poor". Furthermore, in terms in the durability, those cases where the voltage drop rate after the test with respect to before the test was less than 20% when the current density was 1.5 A/cm² were rated "Excellent", those cases where the voltage drop rate was 20% or more and less than 30% were rated "Good", and those cases where the voltage drop rate was 30% or more were rated "Poor".

**[Table 1]**

| | Silicon atom ratio [at%] | Power generation performance | Durability |
|---|---|---|---|
| Example 1 | 4 | Excellent | Excellent |
| Example 2 | 8 | Good | Excellent |
| Example 3 | 0.5 | Excellent | Good |
| Example 4 | 5 | Excellent | Excellent |
| Comparative Example 1 | 15 | Poor | Excellent |
| Comparative Example 2 | 0 | Excellent | Poor |
| Comparative Example 3 | 0 | Poor | Poor |

As shown in Table 1, in each of Examples 1 to 4, the ratio of the number of silicon atoms in the electrode catalyst layer was 0.5 at% or more and 10 at% or less. Further, an "Excellent" or "Good" rating was obtained for the power generation performance and the durability. That is, in Examples 1 to 4, membrane electrode assemblies were obtained that were capable of forming a fuel cell having excellent power generation performance and durability.

On the other hand, in Comparative Examples 1 to 3, the ratio of the number of silicon atoms in the electrode catalyst layer was outside the range of 0.5 at% or more and 10 at% or less. Further, a "Poor" rating was obtained for least one of the power generation performance and the durability. That is, when the ratio of the number of silicon atoms in the electrode catalyst layer was outside the above range, at least one of the power generation performance and the durability decreased.

Therefore, it was found that when the ratio of the number of silicon atoms in the electrode catalyst layer is 0.5 at% or more and 10 at% or less, a membrane electrode assembly capable of constituting a fuel cell having excellent power generation performance and durability can be obtained.

### [Reference Signs List]

1 ... Membrane electrode assembly,
2C ... Oxygen electrode,
2A ... Fuel electrode,
3 ... Polymer electrolyte fuel cell,
10, 10C, 10A ... Electrode catalyst layer,
11 ... Polymer electrolyte membrane,
12 ... Catalyst particle,
13 ... Polymer electrolyte,
14 ... Fibrous material,
15 ... Electroconductive support,
16... Metal particle,
17 ... Ionic liquid,
18 ... Inorganic film,
21C, 21A ... Gasket,
22C, 22A ... Gas diffusion layer,
23C, 23A ... Separator,
24C, 24A ... Gas flow path,
25C, 25A ... Cooling water flow path.

## Claims

1. An electrode catalyst layer for a polymer electrolyte fuel cell,
the electrode catalyst layer comprising catalyst particles, a polymer electrolyte, and a fibrous material, wherein
the catalyst particles each comprise an electroconductive support, a plurality of metal particles supported on the electroconductive support, an ionic liquid in contact with a surface of the metal particles and electroconductive support, and an inorganic film covering a surface of the metal particles and electroconductive support via the ionic liquid,
the inorganic film contains Si, and
a ratio of a number of silicon atoms to a total number of atoms of carbon, nitrogen, oxygen, fluorine, silicon, sulfur, and platinum elements in the electrode catalyst layer, as obtained by energy dispersive X-ray spectroscopy, is 0.5 at% or more and to 10 at% or less.

2. The electrode catalyst layer according to claim 1, wherein
the inorganic film contains silica.

3. The electrode catalyst layer according to claim 1 or 2, wherein
the ionic liquid is an imidazolium salt.

4. The electrode catalyst layer according to claim 3, wherein
the ionic liquid is a 1-alkyl-3-methylimidazolium bis(trifluoromethanesulfonyl)imide.

5. The electrode catalyst layer according to claim 3, wherein
the ionic liquid is 1-butyl-3-methylimidazolium bis(trifluoromethanesulfonyl)imide.

6. The electrode catalyst layer according to any claim 1 or 2, wherein
the fibrous material exhibits at least one type of conductivity among electron conductivity and proton conductivity.

7. The electrode catalyst layer according to claim 1 or 2, wherein
the fibrous material comprises an azole structure.

8. A membrane electrode assembly comprising:
a polymer electrolyte membrane; and
the electrode catalyst layer according to claim 1 or 2 provided on at least one surface of the polymer electrolyte membrane.

9. A polymer electrolyte fuel cell comprising
the membrane electrode assembly according to claim 8.
